# FASCICULE DE BREVET EUROPEEN

(11) **EP 3 275 741 B1**
(45) Date de publication et mention de la délivrance du brevet: **26.05.2021**
(21) Numéro de dépôt: 17182750.4
(22) Date de dépôt: 24.07.2017
(51) Int. Cl.: B60T 7/12, F16D 55/226

(54) **PROCEDE DE GESTION DU DESSERRAGE D'UN ETRIER DE FREIN ET DISPOSITIF ASSOCIE**
VERFAHREN ZUR STEUERUNG DES LÖSEVORGANGS EINES BREMSSATTELS, UND ENTSPRECHENDE VORRICHTUNG
METHOD FOR MANAGING THE RELEASE OF A BRAKE CALLIPER AND RELATED DEVICE

(30) Priorité: 29.07.2016 FR 1657348
(43) Date de publication de la demande: 31.01.2018
(73) Titulaire: RENAULT s.a.s., 92100 Boulogne-Billancourt (FR)
(72) Inventeur: PERAIN, Frédéric, 78470 SAINT-REMY-LES-CHEVREUSE (FR); VALL-GARCIA, Lionel, 78150 LE CHESNAY (FR)

(56) Documents cités:
- FR-A1- 2 941 757
- FR-A1- 2 952 885
- KR-A- 20120 088 994
- US-A1- 2014 144 730
- US-B1- 6 394 235

## Description

L'invention se rapporte au domaine des transports et plus particulièrement aux applications comportant des moyens de freinage par disque avec un étrier de frein disposant d'une assistance électrique. Elle trouve une application avantageuse sous la forme d'un procédé de gestion du desserrage d'un étrier de frein dans un véhicule automobile équipé d'un actionneur de frein de parking assisté électriquement par un moteur électrique.

Les systèmes de freinage composés d'un étrier de frein serrant des plaquettes de frein sur un disque de frein sont connus. De même, il est connu que ces systèmes de freinage génèrent un frottement résiduel plus ou moins sensible usant prématurément les garnitures des plaquettes de frein. En effet, il n'est pas rare que la garniture de frein reste en léger contact avec le disque. Ce frottement constitue également une perte d'énergie pour le véhicule, cela ayant un impact direct sur la consommation en carburant et les émissions de gaz polluants. Différentes solutions visant à faire reculer les plaquettes de frein sont connues, le recul est parfois assuré par des systèmes à ressorts ou par des systèmes hydrauliques mais ces systèmes sont compliqués avec un comportement vibratoire difficilement contrôlable pouvant aller jusqu'à la rupture des ressorts. Des joints caoutchouc ont également été développés pour assurer le rappel du piston après le freinage mais cette solution n'est pas toujours suffisante et peut créer une dispersion d'efficacité notamment due à la tenue de ces joints dans le temps. Une autre solution par déformation des pièces sensibles sous l'effet de la température du freinage est divulguée dans le document FR2745052A1 mais cela a pour inconvénient une conception coûteuse de plaquette bi ou poly-métal. D'autres solutions existent, telles que décrites par exemple dans les documents FR2952885A1 ou KR20120088994.

Un des buts de l'invention est de remédier à au moins une partie des inconvénients de la technique antérieure en fournissant un procédé de gestion du desserrage d'un étrier de frein utilisant un actionneur de frein de parking assisté par un moteur électrique ainsi qu'en fournissant le dispositif associé.

A cette fin, l'invention propose un procédé de gestion du desserrage d'un étrier de frein comportant un actionneur de frein de parking assisté électriquement par un moteur électrique dans un véhicule automobile, caractérisé en ce que ledit procédé s'applique lors du roulage dudit véhicule, ledit étrier de frein étant préalablement dans une position relâchée, résultant d'une fin de phase de freinage, ledit procédé comportant une étape de réception de données, une étape de requête de desserrage de l'étrier de frein dont la sortie positive entraîne une étape de desserrage de l'étrier de frein par commande en rotation dudit moteur électrique dans un sens de desserrage, ledit moteur électrique entraînant une pièce mobile dans un piston selon un déplacement longitudinal apte à former un espace entre au moins une garniture de frein de l'étrier de frein et un disque de frein.

Grâce à l'invention, le frottement est réduit entre le disque de frein et la garniture de frein du frein de parking assisté électriquement, qu'il soit avant ou arrière, permettant ainsi une réduction de la consommation énergétique du véhicule.

Selon l'invention, lesdites données réceptionnées pendant l'étape de réception de données comportent une vitesse dudit véhicule, et/ou des coordonnées de positionnement dudit véhicule dans l'espace et/ou une information temporelle de freinage effectif et/ou un retour d'information du déplacement effectué par ladite pièce mobile. L'invention permet d'identifier les évènements liés au freinage et les conditions environnementales de sécurité en roulage requises pour autoriser un actionnement du desserrage en toute sécurité

Selon une caractéristique avantageuse, ladite étape de requête de desserrage de l'étrier de frein est conditionnée à une fin de phase de freinage combinée à une localisation dudit véhicule sur une voie fluide sans obstacle, ce qui permet de réduire les frottements après un évènement de freinage dans un environnement n'anticipant pas de freinage imminent.

Selon une autre caractéristique avantageuse, ladite étape de requête de desserrage de l'étrier de frein interrompt l'autorisation de desserrage sur un début de phase de freinage ou sur dépassement d'un seuil prédéterminé de déplacement effectué par ladite pièce mobile. Cela permet d'interrompre le desserrage en cas de freinage nécessaire ou une fois atteinte la position prédéterminée de la pièce mobile.

Selon une autre caractéristique avantageuse, ledit procédé comporte une étape de comptage du nombre d'étapes de desserrage effectuées, dont le résultat est utilisé par ladite étape de requête de desserrage de l'étrier de frein en conditionnant l'autorisation de desserrage au non dépassement par ledit résultat d'un seuil prédéterminé de nombre d'étapes de desserrage effectuées. L'avantage de cette caractéristique est qu'elle permet de ne pas dépasser le nombre de cycles pour lequel est dimensionné l'actionneur.

Avantageusement, ledit procédé comporte une étape de requête de resserrage dont la sortie positive entraîne une étape de resserrage par déplacement du piston et de la pièce mobile pour atteindre une position prédéterminée. Cela permet de retrouver par resserrage la réactivité nominale du frein de parking assisté.

Selon une autre caractéristique avantageuse, ladite étape de requête de resserrage est conditionnée par un état desserré de l'étrier de frein résultant d'une étape précédente de desserrage de l'étrier de frein. Cela permet d'interrompre le desserrage que l'état desserré soit partiel ou complet.

L'invention concerne un dispositif de gestion du desserrage d'un étrier de frein comportant un actionneur de frein de parking assisté électriquement par un moteur électrique dans un véhicule automobile, caractérisé en ce que ledit dispositif comporte des moyens d'activation conditionnés au roulage dudit véhicule lorsque ledit étrier de frein est en position relâchée, ledit dispositif comportant un moyen de réception de données, un moyen de commande de desserrage de l'étrier de frein et un moyen de desserrage de l'étrier de frein apte à faire tourner ledit moteur électrique dans un sens de desserrage et à entraîner une pièce mobile dans un piston dudit actionneur selon un déplacement longitudinal apte à former un espace entre au moins une garniture de frein de l'étrier de frein et un disque de frein.

Ce dispositif présente des avantages analogues à ceux du procédé selon l'invention.

Avantageusement, ledit moteur électrique est apte à entraîner une tige filetée, ladite tige filetée étant apte à engrainer dans ladite pièce mobile coulissante dans ledit piston. Cela permet une architecture simple du dispositif.

Selon une autre caractéristique avantageuse, ledit piston comporte un élément de butée, disposé sur sa périphérie intérieure du côté de l'entrée de la tige filetée, la conformation élément de butée étant apte, lorsque le moyen de desserrage est activé, à arrêter le déplacement de ladite pièce mobile dans ledit piston et à solidariser ledit piston et ladite pièce mobile dans un mouvement dans la direction opposée à ladite au moins une garniture de frein. L'avantage de cette caractéristique est qu'elle permet une meilleure réduction des frottements par éloignement du piston lui-même par rapport au disque de frein.

Selon une autre caractéristique avantageuse, ledit élément de butée est rétractable, ce qui permet, notamment en cas de freinage d'urgence par le conducteur, un serrage par glissement du piston dans sa chambre quelle que soit la position de la pièce mobile dans le piston.

D'autres caractéristiques et avantages apparaîtront à la lecture d'un mode de réalisation préféré décrit en référence aux figures dans lesquelles :
- la figure 1 représente une vue en coupe d'un d'étrier de frein arrière comportant un actionneur de frein de parking assisté par un moteur électrique dans un véhicule automobile, ledit étrier étant apte à la mise en œuvre du procédé selon l'invention ; et,
- la figure 2 est un logigramme du procédé de gestion du desserrage conforme à l'invention ; et
- la figure 3 représente un piston comportant des éléments de butée rétractable dans une variante de réalisation de l'invention.

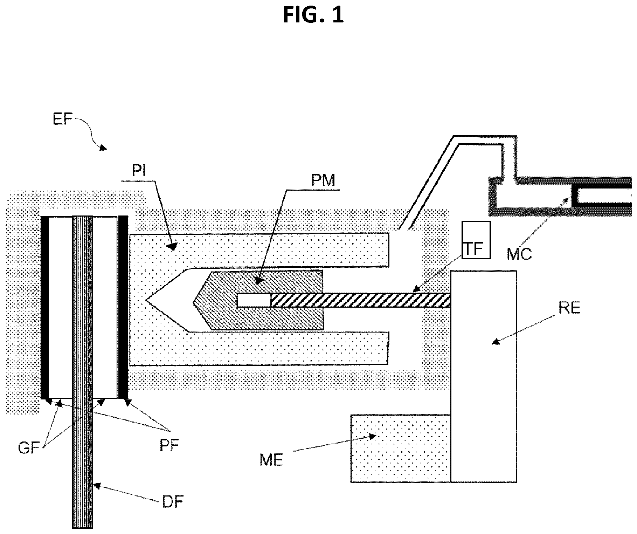

Selon un premier mode de réalisation de l'invention représenté à la **figure 1**, un dispositif de gestion du desserrage selon l'invention comporte un actionneur de frein de parking assisté par un moteur électrique ME apte à desserrer un étrier de frein EF à disque arrière d'un véhicule automobile. Dans le cas d'un système de freinage composé de deux étriers de frein arrière motorisés, on dispose d'un moteur électrique par étrier. En fonctionnement nominal, lorsque le conducteur sollicite les freins, un fluide est poussé par un maître-cylindre MC jusqu'au piston PI via un circuit de freinage, le flux de fluide faisant glisser le piston PI dans sa chambre vers le disque de frein DF, le piston PI poussant alors les plaquettes de frein PF et plus particulièrement leurs garnitures de frein GF contre le disque de frein DF en le pinçant. En position serrée l'étrier de frein EF a pour fonction d'appliquer une pression sur des plaquettes de frein PF contre un disque de frein DF afin de ralentir la roue, non représentée. Dans cette position les garnitures de frein GF des plaquettes de frein PF viennent au contact du disque de frein DF et s'usent conformément à leur destination. Lorsque le freinage cesse, le relâchement de la pédale de frein entraîne le rappel du maître-cylindre MC par son ressort et une dépression dans le circuit de freinage rappelle alors le liquide de frein, l'étrier de frein EF est alors en position dite relâchée. Des contraintes résiduelles demeurent cependant dans l'état relâché générant du frottement sur le disque de frein DF et une usure prématurée des garnitures de frein GF par frottement contre le disque de frein DF. En roulage, les étriers de frein EF sont donc soit en état serré soit en état relâché. Dans le cas d'un frein de parking assisté électriquement par un moteur électrique ME équipant les freins arrière de certains véhicules, celui-ci permet, par action volontaire de serrage du frein de parking par le conducteur, en usage nominal sur un véhicule immobilisé, de serrer les freins arrières à l'arrêt pour maintenir immobile le véhicule en fin de roulage et de desserrer, à l'arrêt, lesdits freins arrière avant le roulage. Ce serrage et ce desserrage du frein de parking à l'arrêt est réalisé via un moteur électrique ME entraînant un réducteur RE en rotation. Une tige filetée TF, liée en rotation au pignon de sortie du réducteur RE, entraîne en translation la pièce mobile PM dans le piston PI, ce qui provoque, soit le serrage, pour maintenir immobile le véhicule, ou le desserrage du disque de frein DF en fonction du sens de rotation du moteur électrique ME. Un système électronique commande et contrôle l'effort exercé via la vitesse de rotation du moteur électrique ME ainsi que le nombre de tours effectués par le moteur électrique ME, l'évaluation de l'effort est notamment basée sur une caractérisation temps-courant. L'usage du système de frein de parking assisté est ici appliqué en phase de roulage pour le desserrage de l'étrier de frein EF en roulage afin de réduire les contraintes résiduelles exercées par le piston PI sur le disque de frein DF via les garnitures de frein GF après freinage, c'est-à-dire dans l'état relâché.

Un premier mode de réalisation consiste à utiliser le système existant de frein de parking assisté de manière réversible en roulage, c'est-à-dire en faisant tourner le moteur en sens inverse afin de libérer la garniture de frein GF de toute contrainte du piston PI sur une course de 2 mm environ.

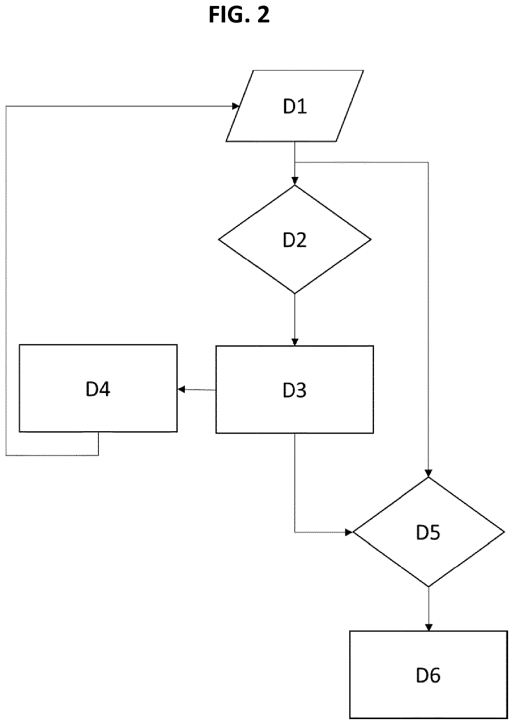

Le procédé est décrit en **figure 2** et comporte 6 étapes. Une étape D1 de réception des données concerne notamment une vitesse du véhicule, et/ou des coordonnées de positionnement du véhicule dans l'espace et/ou une information temporelle de freinage effectif et/ou un retour d'information du déplacement effectué par ladite pièce mobile PM. Cette étape D1 de réception des données s'applique en permanence et peut être transverse à d'autres procédés que celui décrit ici. L'information de vitesse du véhicule provient du calculateur moteur et/ou du système de navigation. Les coordonnées de positionnement du véhicule dans l'espace proviennent du système de navigation. L'information temporelle de freinage effectif provient de la mesure de la pression maître-cylindre MC dont le retour sous un seuil epsilonesque, très proche de zéro et calibrable en fonction du véhicule, indique la fin du freinage. L'étape suivante D2 de requête de desserrage de l'étrier de frein EF sert à décider de l'activation du desserrage par l'assistance électrique lors du roulage. Ici, on conditionne l'autorisation de desserrage à une fin de phase de freinage combinée à une localisation dudit véhicule sur une voie fluide sans obstacle, c'est-à-dire que la décision d'activation de desserrage se prend après chaque freinage sur voie fluide. L'expression « voie fluide » se réfère ici à un roulage du véhicule effectué à une vitesse conforme au roulage autoroutier, c'est-à-dire sans ralentissement ni embouteillage. En effet, pour des raisons de durabilité du système existant de l'actionneur de frein de parking assisté, l'activation du desserrage n'est ici autorisée que sur l'autoroute car une activation en roulage urbain entraînerait une forte sollicitation de l'actionneur alors qu'on utilise ici l'actionneur existant dimensionné pour un nombre donné de cycles de serrage/desserrage complets par fort couple. La notion de « voie fluide » peut incorporer une notion de distance vis à vis des autres véhicules notamment dans le cadre de systèmes d'aide à la conduite ou de véhicule autonome. Cette information de distance serait obtenue notamment via des capteurs de position, des caméras ainsi que par les systèmes de navigation indiquant la présence d'embouteillage à proximité. De même, une prise en considération facultative des conditions extérieures par des capteurs de pluie par exemple permet d'activer le desserrage uniquement par temps sec. Ces différents signaux seraient consommés dans l'étape D1 de réception des données. Une fois le signal d'activation du desserrage délivrée par l'étape D2 de requête de desserrage de l'étrier de frein EF, l'étape D3 de desserrage de l'étrier de frein EF commande le moteur électrique ME en sens inverse du sens de freinage, ainsi le moteur électrique ME par l'intermédiaire du réducteur RE entraîne une tige filetée TF qui entraîne elle-même une pièce mobile PM en déplacement longitudinal dans le piston PI dans le sens d'un recul du piston PI par rapport à la plaquette de frein PF. Ce déplacement diminue ainsi les contraintes exercées par le piston PI sur la plaquette de frein PF intégrant une garniture de frein GF pendant que ledit véhicule roule. Cet actionnement est interrompu dès que le signal d'activation de l'étape D2 de requête de desserrage tombe ou dès que l'étape D5 de requête de resserrage émet une requête. Ainsi, la sortie de l'étape D2 de requête de desserrage tombe sur un front montant de freinage effectif ou sur dépassement d'un seuil prédéterminé de déplacement effectué par ladite pièce mobile PM, c'est-à-dire que la décision d'activation de desserrage cesse dès qu'un freinage est réalisé ou dès qu'une course de desserrage prédéterminée a été atteinte par ladite pièce mobile PM. Cette course de desserrage prédéterminée est ici de 2 mm et elle est connue par le retour d'information du déplacement effectué par ladite pièce mobile PM au moyen de la caractérisation temps-courant précédemment évoquée, alternativement un moyen de comptage de nombre de cycles du moteur électrique ME effectués depuis le début de l'action de desserrage est envisageable. De plus, un compteur d'activations est présent dans le logigramme, dans l'étape D4 de comptage du nombre d'étapes de desserrage effectuées, c'est-à-dire du nombre de desserrages effectués par l'assistance électrique lors de roulages. Le conditionnement de l'activation du desserrage dans l'étape D2 de requête de desserrage au non dépassement par le résultat de compteur d'un seuil prédéterminé de nombre de desserrages effectués permet de maitriser les conséquences en termes de durabilité de ces desserrages en roulage, ledit seuil prédéterminé de nombre de desserrages effectués étant ici calibré à 100000. Ce conditionnement est facultatif car le couple exercé par le moteur électrique ME lors d'un desserrage est significativement plus faible que le couple exercé par ce même moteur électrique ME lors d'un serrage de frein de parking car les contraintes à vaincre ici sont principalement les frottements résiduels. Parallèlement, une étape D5 de requête de resserrage détermine le besoin de resserrage de l'étrier de frein EF qui est conditionnée par un besoin potentiel et anticipé de demande de serrage de frein. Ce besoin de resserrage est inféré dans les cas suivants :
- détection de fin de voie rapide, connue par les informations des coordonnées de positionnement dudit véhicule dans l'espace via des systèmes de navigation
- proximité péage, connue par les informations des coordonnées de positionnement dudit véhicule dans l'espace via des systèmes de navigation
- sortie de l'autoroute du véhicule, connue par les informations des coordonnées de positionnement dudit véhicule dans l'espace via des systèmes de navigation
- signal de radar à proximité, connue par les informations des coordonnées de positionnement dudit véhicule dans l'espace via des systèmes de navigation
- signal de freinage d'urgence, connu par les informations temporelles de freinage effectif (issues des mesures de pression dans le maître-cylindre MC ou d'information du système d'Aide au Freinage d'Urgence ou d'information du système d'antiblocage des roues ou du système de contrôle dynamique de conduite participant au système de freinage)
et cette liste peut aussi comprendre un signal détectant l'hypovigilance, c'est à dire détectant l'état de fatigue du conducteur via des systèmes d'aide à la conduite.
De même le besoin de resserrage de l'étrier de frein EF est aussi conditionné par un besoin potentiel d'immobilisation du véhicule par le frein de parking afin de ne pas modifier la réactivité de la fonction frein de parking assisté en termes de temps de serrage. Ce besoin potentiel d'immobilisation est inféré de la vitesse véhicule lorsque cette dernière passe sous un seuil de vitesse prédéterminé de 5 km/h par exemple.
Ainsi, si les conditions de l'étape D5 de requête de resserrage sont satisfaites l'étape D6 de resserrage s'effectue au moyen du moteur électrique ME qui tourne dans le sens de serrage et entraine la tige filetée TF dans la pièce mobile PM, ce déplacement de la pièce mobile PM dans le piston PI étant commandé jusqu'à atteindre une position de référence prédéterminée.
Le procédé est hébergé dans un calculateur, par exemple le calculateur de freinage, connecté aux différents moyens de mesure précédemment évoqués par bus de données ou par moyen filaire.
Ce premier mode de réalisation permet de ne pas modifier la conception des pièces mécaniques existantes du système de freinage arrière avec assistance électrique tout en libérant pendant certaines phases la garniture de frein GF de toute contrainte résiduelle due au piston PI pour supprimer tout risque de frottement.

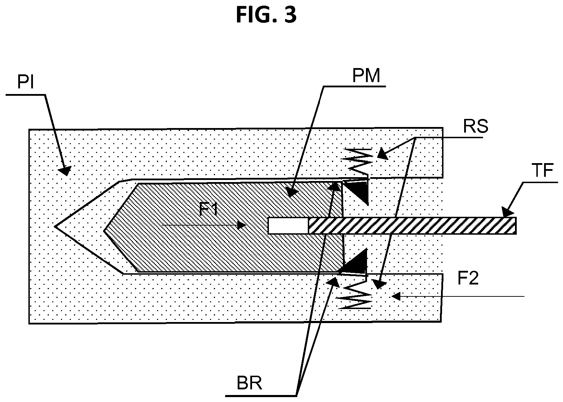

Sur la **figure 3** est représentée une variante, le procédé est le même mais le piston PI est modifié pour comporter des éléments de butée rétractable BR. Sur cette figure le maître-cylindre MC de la figure 1 n'est pas représenté par souci de simplicité. Le piston PI comporte ici deux éléments de butée BR, disposé sur sa périphérie intérieure du côté de l'entrée de la tige filetée TF, la conformation de chaque butée étant apte à arrêter le déplacement de ladite pièce mobile PM dans ledit piston PI ainsi qu'à reculer le piston PI dans la direction opposée auxdites garnitures de frein GF lors de la poursuite de l'étape de desserrage une fois l'élément de butée BR en contact avec ladite pièce mobile PM. Ainsi, lors du recul de la pièce mobile PM, celle-ci va être bloquée par les éléments de butée BR, la pièce mobile PM entraînant alors le piston PI avec elle vers l'arrière et libérant totalement le disque de frein DF de toute contrainte résiduelle exercée par la garniture de frein GF et ce jusqu'à atteindre une distance de recul prédéterminée de 2 mm par exemple, garantissant la libération de la plaquette de frein PF de tout contact avec le piston PI. Le ressort RS de la butée rétractable BR est donc taré de manière à ce que sous une force F1 exercée par la pièce mobile PM sur la butée rétractable BR, la butée BR ne s'escamote pas, ce qui permet de solidariser le piston PI et la pièce mobile PM dans leur mouvement de recul résultant de la rotation dans un sens de desserrage du moteur électrique ME entraînant la tige filetée TF , engrainant elle-même dans la pièce mobile PM. Dans cette variante le recul effectué par le piston PI implique une course pédale allongée par rapport à la situation nominale, ainsi, sur un freinage à l'initiative du conducteur non anticipé par l'étape D5 de requête de resserrage, les freins arrière présentent un retard temporel équivalent au temps de parcours par le piston PI de la distance de recul effectuée. Cette distance de recul prédéterminée est donc calibrée de manière à ne pas dégrader la performance au freinage, en sachant que la performance des freins avant n'est pas affectée. La butée BR est conçue ici rétractable de façon à ne pas empêcher le serrage du piston PI alors que la pièce mobile PM n'est pas encore revenue en contact avec le fond interne du piston PI. Cette caractéristique est particulièrement importante dans le cas mentionné précédemment du freinage à l'initiative du conducteur parce que cela permet au piston PI d'être poussé par la force de compression F2 exercée par le fluide provenant du maître-cylindre MC quand bien même la pièce mobile PM est en position reculée puisque la butée rétractable BR s'escamote pour ne pas gêner le déplacement du piston PI dans sa course vers les plaquettes de frein PF, et ce, quelle que soit la position de la pièce mobile PM dans le piston PI. En effet, le ressort RS de la butée rétractable BR est taré de manière à ce que sous une force F1 exercée par la pièce mobile PM sur la butée rétractable BR, la butée BR ne s'escamote pas, en revanche, sous une force F2 du piston PI vers la pièce mobile PM, la butée BR s'escamote. Cette calibration repose sur le fait que la force F2 du piston PI vers la pièce mobile PM est très élevée car elle est exercée par la pression du maître-cylindre MC. La force F2 du piston PI vers la pièce mobile PM est donc plus élevée (quelques bars) que la force F1 exercée par la pièce mobile PM sur la butée rétractable BR qui n'équivaut qu'à la résistance au glissement du piston PI dans sa chambre. Cette variante est appliquée suivant les mêmes étapes et les mêmes conditions que décrites dans le premier mode de réalisation, ainsi, après avoir exercé une action de desserrage pendant le roulage il faut refaire l'action de serrage pour retour en position nominale du piston PI et de la pièce mobile PM dès que le frein est de nouveau actionné ou sur détection des conditions de l'étape D6 de resserrage citées plus haut. L'application de ce procédé uniquement sur autoroute et pas en roulage urbain se justifie ici à la fois par le nombre de sollicitations ainsi que par le fait que la vitesse de recul et d'avancée du piston PI sont insuffisantes pour répondre aux sollicitations rapides d'une densité de circulation urbaine.

## Revendications

1. Procédé de gestion du desserrage d'un étrier de frein (EF) comportant un actionneur de frein de parking assisté électriquement par un moteur électrique (ME) dans un véhicule automobile, ledit procédé s'applique lors du roulage dudit véhicule, ledit étrier de frein (EF) étant préalablement dans une position relâchée, résultant d'une fin de phase de freinage, ledit procédé comportant une étape (D1) de réception de données, une étape (D2) de requête de desserrage de l'étrier de frein (EF) dont la sortie positive entraîne une étape (D3) de desserrage de l'étrier de frein (EF) par commande en rotation dudit moteur électrique (ME) dans un sens de desserrage, ledit moteur électrique (ME) entraînant une pièce mobile (PM) dans un piston (PI) selon un déplacement longitudinal apte à former un espace entre au moins une garniture de frein (GF) de l'étrier de frein (EF) et un disque de frein (DF), ledit procédé étant **caractérisé en ce que** lesdites données réceptionnées pendant l'étape (D1) de réception de données comportent une vitesse dudit véhicule, et/ou des coordonnées de positionnement dudit véhicule dans l'espace et/ou une information temporelle de freinage effectif et/ou un retour d'information du déplacement effectué par ladite pièce mobile.

2. Procédé selon la revendication précédente caractérisé en que ladite étape (D2) de requête de desserrage de l'étrier de frein (EF) est conditionnée à une fin de phase de freinage combinée à une localisation dudit véhicule sur une voie fluide sans obstacle.

3. Procédé selon l'une quelconque des revendications précédentes caractérisé en que ladite étape (D2) de requête de desserrage de l'étrier de frein (EF) interrompt l'autorisation de desserrage sur un début de phase de freinage ou sur dépassement d'un seuil prédéterminé de déplacement effectué par ladite pièce mobile (PM).

4. Procédé selon l'une quelconque des revendications précédentes **caractérisé en ce qu'**il comporte une étape (D4) de comptage du nombre d'étapes de desserrage effectuées, dont le résultat est utilisé par ladite étape (D2) de requête de desserrage de l'étrier de frein (EF) en conditionnant l'autorisation de desserrage au non dépassement par ledit résultat d'un seuil prédéterminé de nombre d'étapes de desserrage effectuées.

5. Procédé selon l'une quelconque des revendications précédentes **caractérisé en ce qu'**il comporte une étape (D5) de requête de resserrage dont la sortie positive entraîne une étape (D6) de resserrage par déplacement du piston (PI) et de la pièce mobile (PM) pour atteindre une position prédéterminée.

6. Procédé selon la revendication précédente **caractérisé en ce que** ladite étape (D5) de requête de resserrage est conditionnée par un état desserré de l'étrier de frein (EF) résultant d'une étape précédente (D3) de desserrage de l'étrier de frein (EF).

7. Dispositif de gestion du desserrage d'un étrier de frein (EF) comportant un actionneur de frein de parking assisté électriquement par un moteur électrique (ME) dans un véhicule automobile, ledit dispositif comporte des moyens d'activation conditionnés au roulage dudit véhicule lorsque ledit étrier de frein (EF) est en position relâchée, ledit dispositif comportant un moyen de réception de données, un moyen de commande de desserrage de l'étrier de frein (EF) et un moyen de desserrage de l'étrier de frein (EF) apte à faire tourner ledit moteur électrique (ME) dans un sens de desserrage et à entraîner une pièce mobile (PM) dans un piston (PI) dudit actionneur selon un déplacement longitudinal apte à former un espace entre au moins une garniture de frein (GF) de l'étrier de frein (EF) et un disque de frein (DF), ledit dispositif étant **caractérisé en ce que** lesdites données réceptionnées par le moyen de réception de données comportent une vitesse dudit véhicule, et/ou des coordonnées de positionnement dudit véhicule dans l'espace et/ou une information temporelle de freinage effectif et/ou un retour d'information du déplacement effectué par ladite pièce mobile.

8. Dispositif selon la revendication précédente, **caractérisé en ce que** ledit moteur électrique (ME) est apte à entraîner une tige filetée (TF), ladite tige filetée (TF) étant apte à engrainer dans ladite pièce mobile (PM) coulissante dans ledit piston (PI).

9. Dispositif selon la revendication précédente, **caractérisé en ce que** ledit piston (PI) comporte un élément de butée (BR), disposé sur sa périphérie intérieure du côté de l'entrée de la tige filetée (TF), la conformation élément de butée (BR) étant apte, lorsque le moyen de desserrage est activé, à arrêter le déplacement de ladite pièce mobile (PM) dans ledit piston (PI) et à solidariser ledit piston (PI) et ladite pièce mobile (PM) dans un mouvement dans la direction opposée à ladite au moins une garniture de frein (GF).

10. Dispositif selon la revendication précédente, **caractérisé en ce que** ledit élément de butée (BR) est rétractable.

## Patentansprüche

1. Verfahren zur Verwaltung des Lösens eines Bremssattels (EF), der einen elektrisch durch einen Elektromotor (ME) unterstützten Aktuator einer Parkbremse in einem Kraftfahrzeug aufweist, wobei das Verfahren beim Fahren des Fahrzeugs angewendet wird, wobei der Bremssattel (EF) vorher in einer gelockerten Position ist, die aus einem Bremsphasenende resultiert, wobei das Verfahren einen Schritt (D1) des Empfangs von Daten, einen Schritt (D2) der Anforderung des Lösens des Bremssattels (EF) aufweist, dessen positiver Ausgang einen Schritt (D3) des Lösens des Bremssattels (EF) durch Drehsteuerung des Elektromotors (ME) in einer Löserichtung bewirkt, wobei der Elektromotor (ME) ein bewegliches Teil (PM) in einem Kolben (PI) gemäß einer Längsverschiebung antreibt, die einen Raum zwischen mindestens einem Bremsbelag (GF) des Bremssattels (EF) und einer Bremsscheibe (DF) formen kann, wobei das Verfahren **dadurch gekennzeichnet ist, dass** die während des Schritts (D1) des Datenempfangs empfangenen Daten eine Geschwindigkeit des Fahrzeugs und/oder Positionierungskoordinaten des Fahrzeugs im Raum und/oder eine zeitliche Information tatsächlichen Bremsens und/oder ein Rücksenden einer Information über die vom beweglichen Teil ausgeführte Verschiebung aufweisen.

2. Verfahren nach dem vorhergehenden Anspruch, **dadurch gekennzeichnet, dass** der Schritt (D2) der Anforderung des Lösens des Bremssattels (EF) von einem Bremsphasenende kombiniert mit einer Lokalisierung des Fahrzeugs auf einem Fahrweg mit hindernisfrei fließendem Verkehr abhängig ist.

3. Verfahren nach einem der vorhergehenden Ansprüche, **dadurch gekennzeichnet, dass** der Schritt (D2) der Anforderung des Lösens des Bremssattels (EF) die Erlaubnis des Lösens bei einem Bremsphasenbeginn oder bei Überschreiten einer vorbestimmten Schwelle einer vom beweglichen Teil (PM) ausgeführten Verschiebung unterbricht.

4. Verfahren nach einem der vorhergehenden Ansprüche, **dadurch gekennzeichnet, dass** es einen Schritt (D4) des Zählens der Anzahl von ausgeführten Löseschritten aufweist, dessen Ergebnis vom Schritt (D2) der Anforderung des Lösens des Bremssattels (EF) verwendet wird, indem die Erlaubnis des Lösens vom Nichtüberschreiten durch das Ergebnis einer vorbestimmten Anzahlschwelle von ausgeführten Löseschritten abhängig gemacht wird.

5. Verfahren nach einem der vorhergehenden Ansprüche, **dadurch gekennzeichnet, dass** es einen Schritt (D5) der Anforderung des Nachziehens aufweist, dessen positiver Ausgang einen Schritt (D6) des Nachziehens durch Verschiebung des Kolbens (PI) und des beweglichen Teils (PM) bewirkt, um eine vorbestimmte Position zu erreichen.

6. Verfahren nach dem vorhergehenden Anspruch, **dadurch gekennzeichnet, dass** der Schritt (D5) der Nachziehanforderung durch einen gelösten Zustand des Bremssattels (EF) bedingt wird, der aus einem vorhergehenden Schritt (D3) des Lösens des Bremssattels (EF) resultiert.

7. Vorrichtung zur Verwaltung des Lösens eines Bremssattels (EF), der einen Aktuator einer Parkbremse aufweist, der elektrisch von einem Elektromotor (ME) in einem Kraftfahrzeug unterstützt wird, wobei die Vorrichtung Aktivierungseinrichtungen aufweist, die vom Fahren des Fahrzeugs abhängig sind, wenn der Bremssattel (EF) in gelockerter Position ist, wobei die Vorrichtung eine Datenempfangseinrichtung, eine Steuereinrichtung des Lösens des Bremssattels (EF) und eine Löseeinrichtung des Bremssattels (EF) aufweist, die den Elektromotor (ME) in einer Lösungsrichtung drehen und ein bewegliches Teil (PM) in einem Kolben (PI) des Aktuators gemäß einer Längsverschiebung antreiben kann, die einen Raum zwischen mindestens einem Bremsbelag (GF) des Bremssattels (EF) und einer Bremsscheibe (DF) formen kann, wobei die Vorrichtung **dadurch gekennzeichnet ist, dass** die von der Datenempfangseinrichtung empfangenen Daten eine Geschwindigkeit des Fahrzeugs und/oder Positionierungskoordinaten des Fahrzeugs im Raum und/oder eine zeitliche Information des tatsächlichen Bremsens und/oder ein Rücksenden einer Information der durch das bewegliche Teil ausgeführten Verschiebung aufweisen.

8. Vorrichtung nach dem vorhergehenden Anspruch, **dadurch gekennzeichnet, dass** der Elektromotor (ME) eine Gewindestange (TF) antreiben kann, wobei die Gewindestange (TF) in das im Kolben (PI) gleitende bewegliche Teil (PM) eingreifen kann.

9. Vorrichtung nach dem vorhergehenden Anspruch, **dadurch gekennzeichnet, dass** der Kolben (PI) ein Anschlagelement (BR) aufweist, das auf seinem Innenumfang auf der Seite des Eingangs der Gewindestange (TF) angeordnet ist, wobei die die Anschlagelementgestaltung (BR), wenn die Lösungseinrichtung aktiviert wird, die Verschiebung des beweglichen Teils (PM) im Kolben (PI) anhalten und den Kolben (PI) und das bewegliche Teil (PM) in einer Bewegung in der Richtung entgegengesetzt zum mindestens einen Bremsbelag (GF) fest miteinander verbinden kann.

10. Vorrichtung nach dem vorhergehenden Anspruch, **dadurch gekennzeichnet, dass** das Anschlagelement (BR) zurückziehbar ist.

## Claims

1. Method for managing the release of a brake caliper (EF) comprising a parking brake actuator electrically assisted by an electric motor (ME) in a motor vehicle, said method being applied during the running of said vehicle, said brake caliper (EF) being in a released position beforehand, resulting from an end of a braking phase, said method comprising a step (D1) of receiving data, a step (D2) of requesting release of the brake caliper (EF) whose positive conclusion results in a step (D3) of releasing the brake caliper (EF) by commanding said electric motor (ME) to rotate in a release direction, said electric motor (ME) driving a movable part (PM) in a piston (PI) with a longitudinal movement able to form a space between at least one brake lining (GF) of the brake caliper (EF) and a brake disc (DF), said method being **characterized in that** said data received during the data receiving step (D1) comprise a speed of said vehicle, and/or spatial position coordinates of said vehicle and/or temporal effective braking information and/or a return of information relating to the movement carried out by said movable part.

2. Method according to the preceding claim, **characterized in that** said step (D2) of requesting release of the brake caliper (EF) is conditioned on an end of a braking phase combined with a location of said vehicle on an obstacle-free fluid lane.

3. Method according to either one of the preceding claims, **characterized in that** said step (D2) of requesting release of the brake caliper (EF) interrupts the release authorization over a start of a braking phase or on exceeding a predetermined threshold of movement carried out by said movable part (PM).

4. Method according to any one of the preceding claims, **characterized in that** it comprises a step (D4) of counting the number of release steps carried out, the result of which is used by said step (D2) of requesting release of the brake caliper (EF) by conditioning the release authorization on the non-exceeding by said result of a predetermined threshold of number of release steps carried out.

5. Method according to any one of the preceding claims, **characterized in that** it comprises a reapplication request step (D5) whose positive conclusion results in a step (D6) of reapplication by moving the piston (PI) and the movable part (PM) in order to reach a predetermined position.

6. Method according to the preceding claim, **characterized in that** said reapplication request step (D5) is conditioned by a released state of the brake caliper (EF) resulting from a preceding step (D3) of releasing the brake caliper (EF).

7. Device for managing the release of a brake caliper (EF) comprising a parking brake actuator electrically assisted by an electric motor (ME) in a motor vehicle, said device comprising activation means conditioned on the running of said vehicle when said brake caliper (EF) is in the released position, said device comprising a data receiving means, a means for commanding release of the brake caliper (EF) and a means of releasing the brake caliper (EF) that is able to rotate said electric motor (ME) in a release direction and to drive a movable part (PM) in a piston (PI) of said actuator with a longitudinal movement able to form a space between at least one brake lining (GF) of the brake caliper (EF) and a brake disc (DF), said device being **characterized in that** said data received by the data receiving means comprise a speed of said vehicle, and/or spatial positioning coordinates of said vehicle and/or temporal effective braking information and/or a return of information relating to the movement carried out by said movable part.

8. Device according to the preceding claim, **characterized in that** said electric motor (ME) is able to drive a threaded rod (TF), said threaded rod (TF) being able to engage in said movable part (PM) sliding in said piston (PI).

9. Device according to the preceding claim, **characterized in that** said piston (PI) comprises a stop element (BR) arranged on its inner periphery on the inlet side of the threaded rod (TF), the stop element (BR) configuration being capable, when the release means is activated, of arresting the movement of said movable part (PM) in said piston (PI) and of locking said piston (PI) and said movable part (PM) in a movement in the direction opposite to said at least one brake lining (GF).

10. Device according to the preceding claim, **characterized in that** said stop element (BR) is retractable.
